# EUROPEAN PATENT SPECIFICATION

(11) **EP 2 944 191 B1**
(45) Date of publication and mention of the grant of the patent: **25.07.2018**
(21) Application number: 13870653.6
(22) Date of filing: 26.12.2013
(51) Int. Cl.: A01M 1/02, A01M 1/20, A01M 1/10

(54) **FLYING INSECT PEST TRAP**
FALLE FÜR FLIEGENDE INSEKTENSCHÄDLINGE
PIÈGE D'INSECTE NUISIBLE VOLANT

(30) Priority: 11.01.2013 JP 2013003190
(43) Date of publication of application: 18.11.2015
(73) Proprietor: DAINIHON JOCHUGIKU CO., LTD., Osaka-shi Osaka 550-0001 (JP)
(72) Inventor: KOYAMA, Hironori, Toyonaka-shi Osaka 561-0827 (JP); ONO, Taiji, Toyonaka-shi Osaka 561-0827 (JP); HIKITSUCHI, Tomoyuki, Toyonaka-shi Osaka 561-0827 (JP); KANZAKI, Tsutomu, Toyonaka-shi Osaka 561-0827 (JP); NAKAYAMA, Koji, Toyonaka-shi Osaka 561-0827 (JP)
(74) Representative: Intès, Didier Gérard André
(86) International application number: PCT/JP2013/084898
(87) International publication number: WO 2014/109247

(56) References cited:
- EP-A1- 2 084 962
- EP-A1- 2 489 261
- JP-A- 2003 153 645
- JP-A- 2010 057 502
- JP-A- 2012 139 202
- JP-A- 2012 139 202

## Description

### TECHNICAL FIELD

The present invention relates to a flying insect pest trap that catches flying insect pests by causing an attracting component contained therein to vaporize and diffuse out of the trap.

### BACKGROUND ART

A variety of flying insect pest traps containing an attracting agent that are used to control flying insect pests such as small flies, etc., are available on the market. The flying insect pest trap is required to have a characteristic structure as well as an attracting agent having a high attracting effect in order to efficiently attract flying insect pests into the trap. For example, because flying insect pests tend to perch on a protrusion or a hole edge, the attracting effect may be improved if the flying insect pest trap has a structure on which flying insect pest easily perch, such as a protrusion portion, hole portion, etc.

A known flying insect pest trap that is used to catch small flies, etc., has a horn-shaped portion protruding upward in order to exhibit a perch effect on the flying insect pests (see, for example, Patent Document 1). Patent Document 1 describes a flying insect pest trap that has an opening portion through which flying insect pests enter the trap, at a side portion of the protruding portion. Patent Document 1 states that, therefore, a flying insect pest perching on the protruding portion can be attracted into the trap through the opening portion.

Furthermore, JP2012139202 (A) discloses a flying insect pest catching device including an attractive part for attracting flying insect pests; a base for supporting the attractive part, and a tray for housing a chemical holder in which the attractive ingredients are held. The attractive part has edge parts having a projecting cross section projecting outward, and opened parts adjacent to the edge parts.

### CITATION LIST

### PATENT LITERATURE

Patent Document 1: Japanese Unexamined Patent Application Publication No. 2010-57502

### SUMMARY OF INVENTION

### TECHNICAL PROBLEM

In the flying insect pest trap of Patent Document 1, the protruding portion that Patent Document 1 suggests has a perch effect, is a portion of the lid that bulges out upward in a horn-like shape to be exposed. Therefore, even if a flying insect pest perches on the protruding portion, the flying insect pest is easily visually recognized, and therefore, is likely to flee at the slightest hint of a human, for example. Also, a tip of the protruding portion that is easy for a flying insect pest to perch on is located away from an opening portion of the protruding portion through which a flying insect pest enters the trap. Therefore, when a flying insect pest perches on the protruding portion in the vicinity of its tip, the flying insect pest is not always smoothly guided to the opening portion. Moreover, there are a plurality of opening portions through which flying insect pests enter the trap. These opening portions, which have the same shape, are arranged symmetrically around the protruding portion as a center. Therefore, the diffusion of the attracting component released through the opening portions is invariable, i.e., is likely to be constant and uniform. As a result, the flying insect pest attracting effect may not be sustained.

With the above problems in mind, the present invention has been made. It is an object to provide a flying insect pest trap that can exhibit a good attracting effect on flying insect pests typified by small flies such as Drosophilidae, Phoridae, Sciaridae, Mycetophilidae, Psychodidae, etc., particularly by devising the shape of an attraction opening of the flying insect pest trap.

### SOLUTION TO PROBLEM

The present invention relates to a flying insect pest trap according to claim 1.

To achieve the above object, a flying insect pest trap according to the present disclosure has the following characteristic configurations.

A flying insect pest trap for catching a flying insect pest by causing an attracting component in the trap to vaporize and diffuse out of the trap, includes a lid portion having a plurality of attraction openings through which the flying insect pest is attracted into the trap, and a tray portion that accommodates a chemical substance portion containing the attracting component, and retains the flying insect pest entering the trap through a plurality of attraction openings. At least 60% of the plurality of attraction openings have shapes that are different from each other.

In the flying insect pest trap thus configured, the lid portion has a plurality of attraction openings. Moreover, at least 60% of the attraction openings have shapes that are different from each other. As a result, when the attracting component is caused to vaporize and diffuse into the outside from the chemical substance portion accommodated in the flying insect pest trap through the attraction openings, the attracting component is diffused in a complicated pattern due to the different shapes of the attraction openings. Therefore, in various environments, the attracting component is more likely to reach flying insect pests flying in various patterns. This allows the flying insect pest trap to effectively and sustainably attract flying insect pests.

In the flying insect pest trap of the present disclosure, the plurality of attraction openings are preferably formed at random positions with respect to a center of the lid portion as viewed above.

In the flying insect pest trap thus configured, the plurality of attraction openings formed in the lid portion are arranged randomly as viewed above. Therefore, the attracting component is diffused through the attraction openings in a more complicated pattern, and therefore, can be diffused into a wide range, whereby the flying insect pest attracting effect of the flying insect pest trap can be further improved.

In the flying insect pest trap of the present disclosure, the plurality of attraction openings are preferably formed at symmetrical positions with respect to a center of the lid portion as viewed above.

In the flying insect pest trap thus configured, the plurality of attraction openings formed in the lid portion are arranged symmetrically with respect to a point. Therefore, the attracting component can be diffused through the attraction openings in amounts that vary in a predetermined pattern, and therefore, the diffusion of the attracting component can be easily controlled.

In the flying insect pest trap of the present disclosure, the lid portion preferably has step portions that position the plurality of attraction openings at heights that are different from each other.

In the flying insect pest trap thus configured, the lid portion has step portions, and therefore, the plurality of attraction openings are arranged in a stepwise pattern, so that the air ventilation of the flying insect pest trap is improved and the passage of an air flow is complicated. As a result, the diffusion of the attracting component vaporizing and diffusing from the chemical substance portion is accelerated. This can further improve the flying insect pest attracting effect.

In the flying insect pest trap of the present disclosure, the lid portion preferably has an inclined portion that reflects light.

In the flying insect pest trap thus configured, the reflection of light by the inclined portion of the lid portion allows flying insect pests to reliably visually recognize the lid portion, thereby effectively attracting the flying insect pests toward the lid portion in which the attraction openings are formed.

In the flying insect pest trap of the present disclosure, the tray portion preferably has a band-shaped protruding portion, at least a portion of the band-shaped protruding portion being in contact with the chemical substance portion.

In the flying insect pest trap thus configured, a flying insect pest entering the flying insect pest trap through the plurality of attraction openings of the lid portion moves down toward the chemical substance portion along the band-shaped protruding portion provided in the tray portion. Thus, the band-shaped protruding portion provided in the tray portion can reliably guide a trapped flying insect pest to a deep position in the tray portion. In addition, flying insect pests killed after reaching the chemical substance portion can be retained in the tray portion.

In the flying insect pest trap of the present disclosure, the tray portion preferably has a concave portion in an outer side surface of the tray portion. When a plurality of the tray portions are stacked in a height direction, an upper edge of the band-shaped protruding portion is engaged with the concave portion.

In the flying insect pest trap thus configured, when a plurality of the tray portions are stacked in a height direction, an upper edge of the band-shaped protruding portion provide in one tray portion is engaged with the concave portion formed in the outer side surface of another tray portion put on top of that tray portion. Therefore, the volume of space can be made compact. As a result, the efficiency of stacking the products for storage and transport can be improved.

In the flying insect pest trap of the present disclosure, the tray portion is preferably transparent or translucent.

In the flying insect pest trap thus configured, the inside of the tray portion, which retains flying insect pests, can be reliably visually observed from the outside. Therefore, it is easy to confirm the attracting effect and know when to replace the tray portion. This allows the flying insect pest trap to be easily handled.

### BRIEF DESCRIPTION OF DRAWINGS

[FIG. 1] FIG. 1 is a perspective view of a flying insect pest trap.
[FIG. 2] FIG. 2 is a perspective view of a tray portion.
[FIG. 3] FIG. 3 is a side view of a flying insect pest trap.
[FIG. 4] FIG. 4 is a cross-sectional side view of a flying insect pest trap.
[FIG. 5] FIG. 5 is a plan view of a flying insect pest.
[FIG. 6] FIG. 6 is a schematic diagram showing shapes of attraction openings of flying insect pest traps used in Examples 1-6 and Comparative Examples 1 and 2.

### DESCRIPTION OF EMBODIMENTS

Embodiments of a flying insect pest trap according to the present invention will now be described. Note that the present invention is not intended to be limited to configurations described in the following embodiments or shown in the accompanying drawings.

### <Structure of Flying Insect Pest Trap>

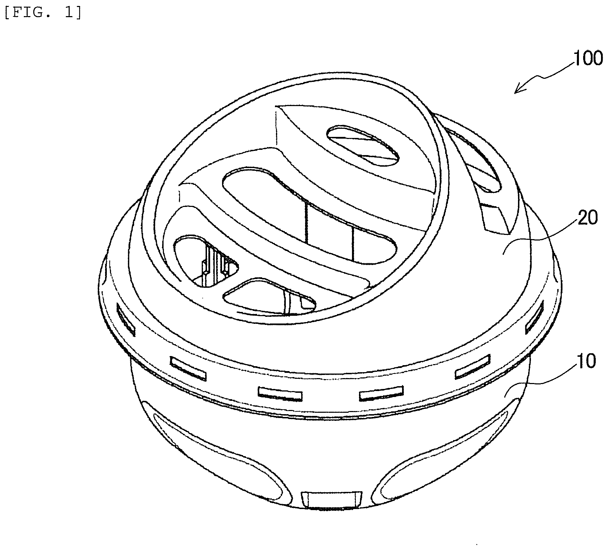

FIG. 1 is a perspective view of a flying insect pest trap 100 according to an embodiment of the present invention. The flying insect pest trap 100, which is used to catch and control various flying insect pests (particularly, small flies), includes a tray portion 10 and a lid portion 20. The tray portion 10 and the lid portion 20 will now be described in detail.

### [Tray Portion]

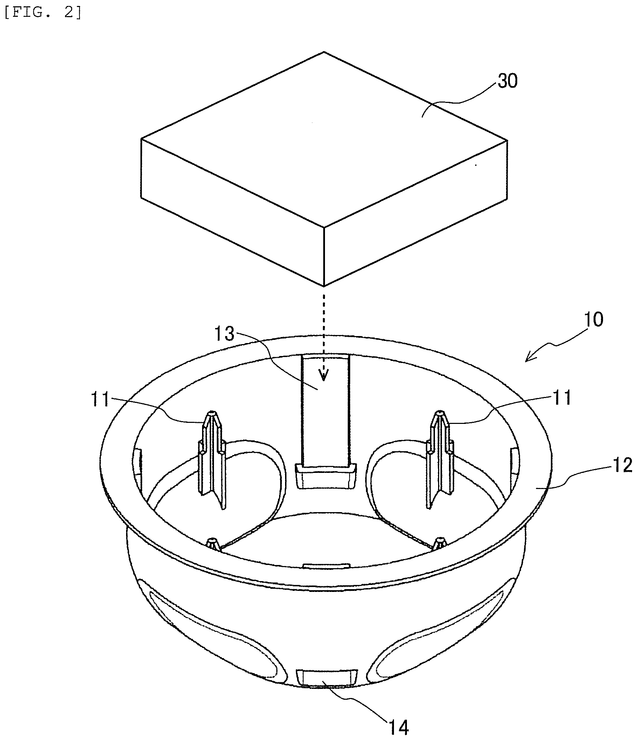

FIG. 2 is a perspective view of the tray portion 10, which is a lower portion of the flying insect pest trap 100. The tray portion 10 is a cup-shaped container for retaining dead flying insect pests. As shown in FIG. 2, the tray portion 10 has a chemical substance portion 30 (described below) that is provided at an inner bottom portion thereof or in the proximity of the inner bottom portion. The chemical substance portion 30 holds a chemical substance containing an insecticidal component that can kill flying insect pests. The tray portion 10 has a positioning member 11 for positioning the chemical substance portion 30 at substantially the center thereof. In this embodiment, there are four positioning members 11 that limit side surfaces of the chemical substance portion 30 so that the chemical substance portion 30 is positioned at substantially the center of the tray portion 10. After the chemical substance portion 30 is set inside the positioning members 11, a fastening part (not shown) is attached onto the positioning members 11 to hold the chemical substance portion 30 in place. Note that the chemical substance portion 30 may be held in place by employing a bar-shaped member that penetrates through a center of the chemical substance portion 30, a clamp that holds the chemical substance portion 30, etc., instead of the positioning member 11 and the fastening part.

The tray portion 10 has a flange portion 12 for removably attaching the lid portion 20 (described below) to the tray portion 10. When the tray portion 10 is brand-new or unopened, a multilayer barrier film (not shown) including an aluminum film and a resin film is attached to the flange portion 12 to seal the inside of the tray portion 10, whereby the chemical substance contained in the chemical substance portion 30 is prevented from being dried out. When the tray portion 10 is used, the barrier film is removed from the flange portion 12, and the flange portion 12 is fitted to the lid portion 20 while the inside of the tray portion 10 is exposed.

The tray portion 10 has a band-shaped protruding portion 13 for guiding flying insect pests to the chemical substance portion 30 on an inner side surface thereof. In this embodiment, there are four band-shaped protruding portions 13 equally spaced on the inner side surface of the tray portion 10. Each band-shaped protruding portion 13 has the following dimensions: about 3-10 mm wide; about 0.5-3 mm thick; about 10-30 mm long. Each band-shaped protruding portion 13 extends from the flange portion 12 to a lower portion of the positioning member 11. The chemical substance portion 30 is positioned in contact with at least a portion of each band-shaped protruding portion 13. A flying insect pest entering the flying insect pest trap 100 moves down toward the chemical substance portion 30 along the band-shaped protruding portion 13. Thereafter, when the flying insect pest reaches a position where the band-shaped protruding portion 13 is in contact with the chemical substance portion 30, or its proximity, the flying insect pest is killed by the action of an insecticidal component contained in the chemical substance. Thus, the band-shaped protruding portion 13 provided on the inner side surface of the tray portion 10 can reliably guide a trapped flying insect pest to a deep position in the tray portion 10 where the chemical substance portion 30 is provided. In addition, flying insect pests killed after reaching the chemical substance portion 30 can be retained in the tray portion 10.

As described above, the chemical substance portion 30 provided in the tray portion 10 causes an attracting component contained in the chemical substance, with which the chemical substance portion 30 is impregnated, to vaporize and diffuse out of the trap, thereby attracting flying insect pests into the flying insect pest trap 100. The chemical substance portion 30 also causes an insecticidal component contained in the chemical substance to be in contact with or taken in by an attracted flying insect pest, thereby killing the flying insect pest. The chemical substance portion 30 is an absorbent carrier that is impregnated with the chemical substance. Examples of such a carrier include nonwoven pulp fabric and felt. A thicker carrier may be provided by stacking a plurality of sheets of thin nonwoven pulp fabric or felt. The nonwoven pulp fabric or felt may be treated by spunlacing to form a web on a surface thereof, or embossing, in order to allow the nonwoven pulp fabric or felt to efficiently absorb the chemical substance while the shape thereof is maintained. Instead of nonwoven pulp fabric or felt, the carrier of the chemical substance portion 30 may be formed of sponge, paper, a fiber aggregate, etc., which can absorb liquid. Alternatively, a gel material obtained by combining a liquid attracting component with an insecticidal component may be employed as the chemical substance portion 30. The chemical substance contains an attracting agent for causing flying insect pests to enter the tray portion 10, and an insecticide for killing flying insect pests. Examples of the attracting agent include balsamic vinegar, apple cider vinegar, rice vinegar, brown rice vinegar, sake-lees vinegar, soybean vinegar, black vinegar, wine vinegar, sudachi (a Japanese citrus) vinegar, red vinegar, persimmon vinegar, malt vinegar, purple sweet potato vinegar, sugar cane vinegar, etc. These may be used alone or in combination. Of these attracting agents, balsamic vinegar is particularly preferable because of its good flying insect pest attracting effect. Examples of the insecticide include: pyrethroid compounds such as allethrin, prallethrin, imiprothrin, phthalthrin, transfluthrin, resmethrin, phenothrin, cyphenothrin, permethrin, cypermethrin, etofenprox, cyfluthrin, deltamethrin, bifenthrin, fenvalerate, fenpropathrin, empenthrin, silafluofen, metofluthrin, profluthrin, naturally-occurring pyrethrin, pyrethrum extract, etc.; carbamate compounds such as carbaryl, propoxur, methomyl, thiodicarb, etc.; organic phosphorus compounds such as fenitrothion, diazinon, malathion, pyridaphenthion, prothiofos, phoxim, chlorpyrifos, dichlorvos, etc.; oxadiazole compounds such as metoxadiazone, etc.; phenylpyrazole compounds such as fipronil, etc.; sulfonamide compounds such as amidoflumet, etc.; neonicotinoid compounds such as dinotefuran, imidacloprid, etc.; insect growth control compounds such as methoprene, hydroprene, pyriproxyfen, etc.; etc. These can be used alone or in combination. Of these insecticides, dinotefuran, which is a neonicotinoid compound, is particularly preferable because it is less repellent to flying insect pests, and therefore, does not inhibit the attracting action of the attracting agent. The chemical substance may include, in addition to the above attracting agent and insecticide, other attracting agents, such as alcoholic beverages, sake lees, sugars, fruits, processed fruit products, lactic acid products, fish, processed fish products, fish extracts, meats, processed meat products, meat extracts, aroma chemicals, etc. Moreover, if the chemical substance contains a moisture retention component such as an aliphatic polyol (e.g., glycerin, etc.), sugar alcohol (e.g., sorbitol, etc.), thickening polysaccharide (e.g., xanthan gum, etc.), etc., the chemical substance is allowed to exhibit the effect over a long period of time.

The tray portion 10 and the lid portion 20 are configured to be removably attached to each other. Therefore, the lid portion 20 can be removed, and the chemical substance portion 30 in the tray portion 10 can be replaced, or dead flying insect pests that have been attracted and killed in the tray portion 10 can be removed, when necessary. The tray portion 10 is configured to have a horizontal cross-section in the shape of a rectangle, circle, etc. so that the flying insect pest trap 100 can be easily placed in a living space, such as a kitchen, living room, etc. Alternatively, the tray portion 10 may have an indefinite shape. The tray portion 10 may have a base having an area of about 10-100 cm² so that the flying insect pest trap 100 can be placed without being conspicuous. Also, if the tray portion 10 has a depth of about 1-10 cm, the tray portion 10 is satisfactorily stable while the chemical substance portion 30 is held in place. The tray portion 10 may be formed in the shape of a cup by injection molding, vacuum forming, bulging molding, blow molding, etc. using a thermoplastic resin.

The tray portion 10 has a concave portion 14 to which the band-shaped protruding portion 13 is joined, in an outer side surface thereof. The concave portion 14 is provided to improve the efficiency of stacking the tray portions 10. When a large number of the cup-shaped tray portions 10 are manufactured, and stacked on top of each other in the height direction, an upper edge of the band-shaped protruding portion 13 provided in one tray portion 10 is engaged with the concave portion 14 formed in the outer side surface of another tray portion 10 put on top of that tray portion 10. Therefore, a plurality of the tray portions 10 can be compactly stacked, so that the efficiency of stacking the products for storage and transport can be improved.

The tray portion 10 is preferably transparent or translucent. In this case, the inside of the tray portion 10, which retains flying insect pests, can be reliably visually observed from the outside. Therefore, for example, it is easy to confirm the attracting effect and know when to replace the tray portion 10. This allows the flying insect pest trap 100 to be easily handled. In order to impart transparency or translucency to the tray portion 10, the tray portion 10 is formed of, for example, a colorless material such as a polypropylene resin, PET resin, acrylic resin, polyethylene resin, polystyrene resin, etc.. Alternatively, the tray portion 10 may be formed to have a thin thickness so that the inside thereof can be seen through the tray portion 10.

### [Lid Portion]

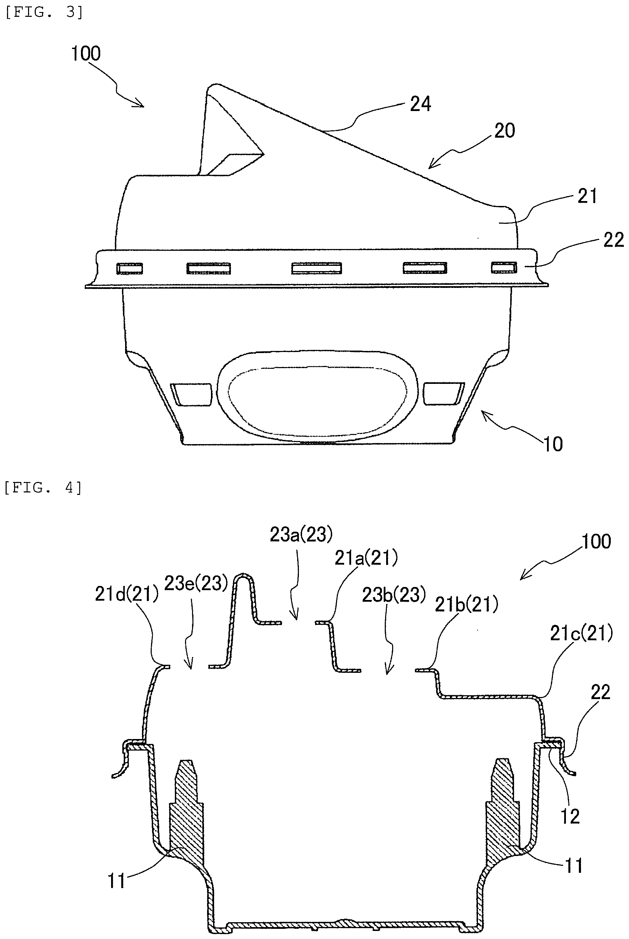

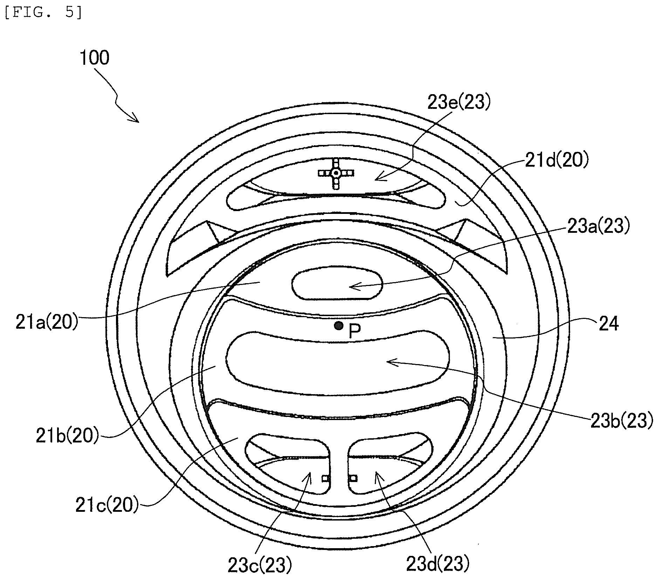

FIG. 3 is a side view of the flying insect pest trap 100 while the lid portion 20 is attached to the tray portion 10. FIG. 4 is a cross-sectional side view of the flying insect pest trap 100. FIG. 5 is a plan view of the flying insect pest trap 100 as viewed from above the lid portion 20. The lid portion 20 is used to introduce external air into the flying insect pest trap 100, and diffuse the attracting component from the chemical substance portion 30 into the outside, whereby flying insect pests are attracted. Also, the lid portion 20 prevents the chemical substance portion 30 accommodated in the tray portion 10 from being exposed. As shown in FIG. 3, the lid portion 20 includes an attraction structural portion 21 that attracts flying insect pests, and a connecting portion 22 that engages with the flange portion 12 of the tray portion 10. The lid portion 20 is formed by injection molding, vacuum forming, bulging molding, blow molding, etc. using a thermoplastic resin. As shown in FIG. 4, the lid portion 20 is configured as a hollow structure in which the attraction structural portion 21 is integrated with the connecting portion 22.

As shown in FIG. 5, the attraction structural portion 21 includes a plurality of attraction openings 23 through which flying insect pests are attracted into the flying insect pest trap 100. In the present invention, as shown in FIG. 4, the attraction structural portion 21 is configured to have four step portions 21a-21d having different heights, which have attraction openings 23a-23e, respectively, in order to cause the attracting component contained in the chemical substance portion 30 to efficiently vaporize and diffuse into the outside through the attraction openings 23. Although FIG. 4 is a cross-sectional side view taken along a line passing through a center (a point P in FIG. 5) of the flying insect pest trap 100, and therefore, no attraction openings are seen in the step portion 21c, the attraction openings 23c and 23d are actually formed in the step portion 21c. In this embodiment, the step portions 21a-21c are provided adjacent to each other at successively decreasing levels (heights), and the step portion 21d is provided on the opposite side from the step portion 21a. In addition, the attraction opening 23a is formed in the step portion 21a, the attraction opening 23b is formed in the step portion 21b, the attraction openings 23c and 23d are formed in the step portion 21c, and the attraction opening 23e is formed in the step portion 21d. Thus, the plurality of attraction openings 23 are arranged in a stepwise pattern, so that the air ventilation of the flying insect pest trap 100 is improved and the passage of an air flow is complicated, whereby the diffusion of the attracting component vaporizing and diffusing from the chemical substance portion 30 is accelerated. This can improve the flying insect pest attracting effect.

At least 60% of the attraction openings 23a-23e formed in the step portions 21a-21d have different shapes. The term "different shapes" means that these shapes do not coincide precisely with each other when the shapes are superimposed on each other. Therefore, for example, similar shapes, or shapes symmetrical with respect to a line (an original shape and its mirror image), do not coincide precisely with each other when the shapes are superimposed on each other, and therefore, are different from each other in the present invention. Although it is most preferable that all of the plurality of attraction openings 23 formed in the attraction structural portion 21 have different shapes, this is not essential. At least 60 % of the attraction openings 23 may have different shapes. If at least 60% of the attraction openings 23 have different shapes, then when the attracting component contained in the chemical substance portion 30 in the flying insect pest trap 100 is caused to vaporize and diffuse into the outside through the attraction openings 23, the different shapes of the attraction openings 23 allow the attracting component to be released and diffused in a complicated pattern. Therefore, in various environments, the attracting component is more likely to reach flying insect pests flying in various patterns. This allows the flying insect pest trap 100 to effectively and sustainably attract flying insect pests.

The attraction openings 23a-23e are arranged at random positions or symmetrical positions with respect to a center of the lid portion 20 as viewed from above. The term "center of the lid portion 20" refers to the center-of-gravity position of the shape as viewed from above. For example, as shown in FIG. 5, when the lid portion 20 is formed in the shape of a circle as viewed from above, the center of the circle corresponds to the center P of the lid portion 20. The term "random positions with respect to the center P of the lid portion 20" means that the attraction openings 23a-23e have at least either different distances from the center P of the lid portion 20 or different shapes, particularly when the attraction opening 23a-23e are viewed from the center P of the lid portion 20. In other words, the plurality of attraction openings 23 are formed in the lid portion 20 at substantially irregular positions as viewed from above. Thus, if the plurality of attraction openings 23 are formed in the lid portion 20 at random positions, the attracting component is diffused through the attraction openings 23 in a more complicated pattern, and therefore, can be diffused into a wide range, whereby the flying insect pest attracting effect of the flying insect pest trap 100 can be further improved. Also, if the attraction openings 23a-23e are formed at symmetrical positions with respect to the center P of the lid portion 20 as viewed from above, the attracting component can be diffused through the attraction openings 23a-23e in amounts that vary in a predetermined pattern, and therefore, the diffusion of the attracting component can be easily controlled. For example, the attracting component is diffused upward to form a vortex flow around a vertical line passing through the center P of the lid portion 20, and therefore, the flying insect pest attracting effect of the flying insect pest trap 100 can be enhanced in a specific direction.

The attraction structural portion 21 has an inclined portion 24 that can reflect light. In this embodiment, the inclined portion 24 surrounds the step portions 21a-21c. The reflection of light by the inclined portion 24 allows flying insect pests to reliably visually recognize the lid portion 20, thereby effectively attracting the flying insect pests toward the lid portion 20 in which the attraction openings 23 are formed. Thus, the inclined portion 24 can supplement the attracting effect of the attracting component while the surface of the lid portion 20 is effectively used. Note that the angle of inclination of the inclined portion 24 is preferably at least 15 degrees with respect to the connecting portion 22 as viewed from the side.

The connecting portion 22 connects the attraction structural portion 21 to the tray portion 10. Therefore, the connecting portion 22 has a shape that can receive the flange portion 12 of the tray portion 10. The connecting portion 22 is preferably easily removably attached to the flange portion 12 by being engaged with a protrusion, etc. Alternatively, for example, the connecting portion 22 may be designed to be screwed onto the flange portion 12. When the connecting portion 22 of the lid portion 20 is engaged with the flange portion 12 of the tray portion 10, the flying insect pest trap 100 is ready to use.

### <Color Scheme for Flying Insect Pest Trap>

It is known that flying insect pests react to or are attracted by different colors in different ways. Therefore, the present inventors have extensively studied the ability of flying insect pests to be attracted to colors. As a result, the present inventors have found that, in an environment in which flying insect pests tend to appear, such as a kitchen, etc., flying insect pests sensitively react to colors having a relatively high hue/chroma (orange, brown, etc.). In addition, the present inventors have found that flying insect pests are effectively attracted toward such colors. Based on this novel finding, the present inventors have made attempts to impart a color(s) having a good flying insect pest attracting effect to the flying insect pest trap 100. As a result, the present inventors have confirmed a synergy of the attracting effect of a color(s) in external appearances of the tray portion 10 and the lid portion 20 and the attracting effect of the attracting component vaporizing from the chemical substance portion 30 in the flying insect pest trap 100, and have found that a significant flying insect pest attracting effect is obtained compared to the conventional art. A color scheme for the tray portion 10 and the lid portion 20 in the flying insect pest trap 100 will be described.

In a color scheme for the flying insect pest trap 100, the color tones (object colors) of the tray portion 10 and the lid portion 20 are determined based on the L*a*b* color space. The L*a*b* color space is a three-dimensional approximate uniform color space for representing lightness and hue/chroma, that has been recommended by the International Commission on Illumination (CIE) since 1976. The L*a*b* color space (CIE 1976) is defined as JIS Z 8729 in Japanese Industrial Standards. In the L*a*b* color space (CIE 1976), L* is an index representing lightness, where L* = 0 indicates black, and L* = 100 indicates white, and a* and b* are indexes representing hue/chroma. Positive a* values represent red, and negative a* values represent green. Positive b* values represent yellow, and negative b* values represent blue. The L*a*b* color space (CIE 1976) is, for example, measured using Illuminant C, which is a standard illuminant, at the 10 degree field of view. In the L*a*b* color space (CIE 1976), lightness and hue/chroma are measured using, for example, a colorimeter (e.g., "CR-400" manufactured by Konica Minolta, Inc.) or a spectrophotometer (e.g., "X-Rite 939" manufactured by Nihon Heihan Kizai Kabushiki Kaisha).

In this embodiment, the tray portion 10 and the lid portion 20 included in the flying insect pest trap 100 are both designed to have a color tone represented by L* = 20 or more, a* = 0 or more, and b* = 0 or more in the L*a*b* color space (CIE 1976), where the two portions are different from each other in at least one of a* and b*. The L* = 20 or more means that the tray portion 10 and the lid portion 20 have at least a predetermined lightness. The a* = 0 or more and b* = 0 or more means that the tray portion 10 and the lid portion 20 have a color ranging from red to brown to yellow. Also, if the tray portion 10 and the lid portion 20 are different from each other in at least one of a* and b*, the tray portion 10 and the lid portion 20 have different color tones. Here, the a* and b* of the tray portion 10 and the lid portion 20 are preferably designed so that a difference in a* between the two portions and/or a difference in b* between the two portions are 10 or more. Specifically, the tray portion 10 and the lid portion 20 are designed so that only the difference in a* therebetween is 10 or more, or only the difference in b* therebetween is 10 or more, or both the difference in a* therebetween and the difference in b* therebetween are 10 or more. Such color tones allow the tray portion 10 and the lid portion 20 to have at least a predetermined lightness and a relatively high hue/chroma, whereby flying insect pests can be attracted into the flying insect pest trap 100. Also, if the tray portion 10 and the lid portion 20 have a clear difference in color tone, flying insect pests are allowed to easily distinguish the tray portion 10 from the lid portion 20. Therefore, if appropriate color tones are impart to the tray portion 10 and the lid portion 20, the flying insect pest trap 100 can be designed so that the inside of the tray portion 10, in which flying insect pests are retained, can be visually observed from the outside while flying insect pests are effectively attracted to the lid portion 20, and therefore, it is easy to handle the flying insect pest trap 100, for example.

In a color scheme for the flying insect pest trap 100, preferably, the color tone of the lid portion 20 is designed so that L* = 30 or more, a* = 15 or more, and b* = 15 or more in the L*a*b* color space (CIE 1976), and the color tone of the tray portion 10 is designed so that L* = 40 or more, a* = 5 or more, and b* = 5 or more in the L*a*b* color space (CIE 1976). More preferably, the color tone of the lid portion 20 is designed so that L* = 30 or more, a* = 30 or more, and b* = 20 or more in the L*a*b* color space (CIE 1976), and the color tone of the tray portion 10 is designed so that L* = 40 or more, a* = 10 or more, and b* = 10 or more in the L*a*b* color space (CIE 1976). If the color tones are thus designed, the lid portion 20 has the color tone of generally orange, and the tray portion 10 has the color tone of generally brown. This color combination induces a particularly good reaction (attraction) from flying insect pests, and therefore, flying insect pests can be more efficiently attracted and caught into the flying insect pest trap 100.

The flying insect pest trap 100 may be colored by mixing a pigment or colorant with a material resin when the tray portion 10 and the lid portion 20 are formed by molding. Alternatively, surfaces of the tray portion 10 and the lid portion 20 may be colored with paint after molding, or a colored film or seal may be attached to the tray portion 10 and the lid portion 20 after molding.

The flying insect pest trap 100 having the color tone thus designed has an improved flying insect pest attracting effect due to the combination of colors of the tray portion 10 and the lid portion 20, and in addition, has a flying insect pest attracting effect due to the attracting component vaporizing and diffusing from the chemical substance portion 30, resulting in a significant attracting effect (synergistic effect).

### <Other Embodiments>

(1) In the above embodiment, the tray portion 10 is assumed to be transparent or translucent. In addition, the lid portion 20 may also be transparent or translucent. In this case, while the flying insect pest trap 100 maintains a high attracting effect, the inside of the tray portion 10 can be easily visually observed without removing the lid portion 20.
(2) In the above embodiment, the lid portion 20 is assumed to preferably have the color tone of orange. Alternatively, a color close to black may be imparted to the lid portion 20. In this case, it is difficult for the user to see dead flying insect pests retained in the tray portion 10 from above, and therefore, the user is less likely to see an unpleasant sight.
(3) In the above embodiment, the tray portion 10 and the lid portion 20 are assumed to be each entirely colored in the same color. Alternatively, a portion of the tray portion 10 or the lid portion 20 may be colored in the same color that is used in the other. For example, in the lid portion 20, the attraction structural portion 21 may be colored in orange, and the connecting portion 22 may be colored in the same brown that is used in the tray portion 10. In this case, an attracting effect similar to that of the flying insect pest trap 100 of the above embodiment is obtained.

### Examples

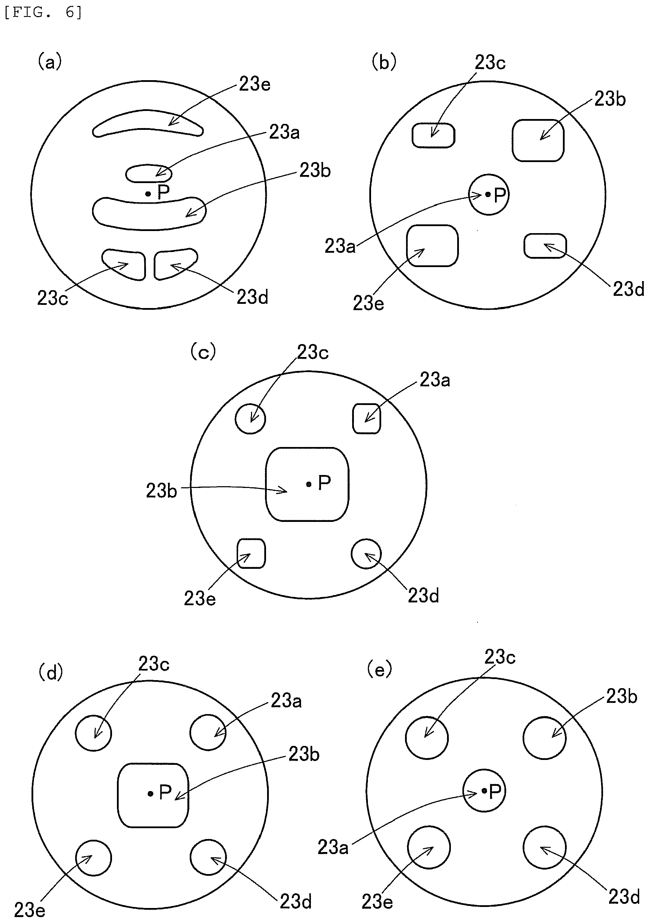

In order to particularly examine the influence of a change in the structure of the flying insect pest trap of the present invention on the catching performance, a plurality of flying insect pest traps (Examples 1-6) having a characteristic configuration of the present invention were prepared to conduct a flying insect pest catching test. Also, for comparison, flying insect pest traps (Comparative Examples 1 and 2) that do not have a characteristic configuration of the present invention were prepared to conduct a similar flying insect pest catching test. FIG. 6 is a schematic diagram showing shapes of attraction openings of the flying insect pest traps used in Examples 1-6 and Comparative Examples 1 and 2. Note that the sum of the areas of attraction openings, which was 960 mm², was the same among all of Example and Comparative Examples.

### <Flying Insect Pest Trap>

The parts of the flying insect pest trap were produced as follows.
(1) Tray portion: the tray portion was formed of polypropylene (PP) resin by injection molding. An external appearance of the tray portion had a light brown color.
(2) Lid portion: the lid portion was formed of polyethylene terephthalate (PET) resin by vacuum forming. An external appearance of the lid portion had an orange color.
(3) Chemical substance portion: the chemical substance portion was produced by impregnating nonwoven pulp fabric as a carrier with a chemical substance. The nonwoven pulp fabric has the following dimensions: 50 mm long; 50 mm wide; and 17 mm thick. The chemical substance contained balsamic vinegar and brown sugar as attracting components, dinotefuran as an insecticidal component, glycerin as a moisture retention component, and other components such as purified water, etc.

### <Testing Method>

One of the flying insect pest traps of Examples 1-6 and Comparative Example 2, and the flying insect pest trap of Comparative Example 1, were placed side by side at substantially the center of the floor of a test room of about 25 m³. Two hundred Drosophilidae insects were released into the test room. After two hours, the number of Drosophilidae insects caught by each flying insect pest trap was counted. The catching performance of a flying insect pest trap was represented by how many times the number of Drosophilidae insects caught by the flying insect pest trap is as large as the number of the flying insect pest trap of Comparative Example 1 as a reference (the ratio of the number of Drosophilidae insects caught by the flying insect pest trap to the number of the flying insect pest trap of Comparative Example 1, where the latter number is reduced to 1.0, and that ratio is referred to as a "catch factor"). The flying insect pest catching test was conducted twice for each trap, and an average was calculated.

### <Results of Tests>

### [Test 1]

The catch factor was obtained for flying insect pest traps having different ratios of "attraction openings having different shapes" to "all attraction openings" (hereinafter referred to as a "different-shape ratio"). In Example 1, a trap having attraction openings of FIG. 6(a) was used. In Example 2, a trap having attraction openings of FIG. 6(b) was used. In Example 3, a trap having attraction openings of FIG. 6(c) was used. In Comparative Example 1, a trap having attraction openings of FIG. 6(d) was used. In Comparative Example 2, a trap having attraction openings of FIG. 6(e) was used. As shown in FIG. 6, in the trap (a) of Example 1, the attraction openings 23a-23e are arranged randomly with respect to the center P of the lid portion. In the trap (b) of Example 2 and the trap (c) of Example 3, the attraction openings 23a-23e are arranged symmetrically with respect to the center P of the lid portion. In the trap (d) of Comparative Example 1 and the trap (e) of Comparative Example 2, the attraction openings 23a-23e are arranged completely symmetrically with respect to the center P of the lid portion. The result of Test 1 is shown in Table 1.

**Table 1**

| | Opening areas (mm²) /shapes of attraction openings (see FIG. 6) | | | | | Sum of areas (mm²)/different-shape ratio (%) | Catch factor |
|---|---|---|---|---|---|---|---|
| Example 1 | 80 | 380 | 110 | 110 | 280 | 960 | 2.0 |
| | (a) 23a | (a) 23b | (a) 23c | (a) 23d | (a) 23e | 100 | |
| Example 2 | 180 | 280 | 110 | 110 | 280 | 960 | 1.6 |
| | (b) 23a | (b) 23b | (b) 23c | (b) 23d | (b) 23e | 60 | |
| Example 3 | 80 | 640 | 80 | 80 | 80 | 960 | 1.5 |
| | (c) 23a | (c) 23b | (c) 23c | (c) 23d | (c) 23e | 60 | |
| Comparative Example 1 | 110 | 520 | 110 | 110 | 110 | 960 | 1.0 |
| | (d) 23a | (d) 23b | (d) 23c | (d) 23d | (d) 23e | 40 | |
| Comparative Example 2 | 192 | 192 | 192 | 192 | 192 | 960 | 0.8 |
| | (e) 23a | (e) 23b | (e) 23c | (e)23d | (e) 23e | 0 | |

As shown in Table 1, in the case of the flying insect pest traps of Examples 1-3 having a different-shape ratio of 50% or more, high catching performance was observed compared to Comparative Example 1, even though the total opening portion area of the attraction openings was the same. This tendency is more significant as the different-shape ratio increases.

### [Test 2]

The catching performance of a flying insect pest trap having a lid portion that has step portions having a plurality of attraction openings positioned at different heights, was tested. The result of Test 2 was shown in Table 2. Example 1 and Comparative Example 1 are the same as those described in Test 1. Example 4 is substantially the same as Example 1 in the arrangement of the attraction openings, and is the same as Example 1 in the opening portion areas and shapes of the attraction openings, and the sum of the opening portion areas and the different-shape ratio. Example 4 is different from Example 1 in that the step portions shown in FIGS. 4 and 5 are provided in the lid portion.

**Table 2**

| | Step portions | Catch factor |
|---|---|---|
| Example 1 | Absent | 2.0 |
| Example 4 | Present | 2.4 |
| Comparative Example 1 | Absent | 1.0 |

As shown in Table 2, when the lid portion had step portions having a plurality of attraction openings positioned at different heights (Example 4), it was observed that the catching performance was further improved compared to Example 1. The catching performance was 2.4 times as high as that of Comparative Example 1.

### [Test 3]

The catching performance of a flying insect pest trap having a lid portion that has an inclined portion that can reflect light, was tested. The result of Test 3 is shown in Table 3. Example 1, Example 4, and Comparative Example 1 are the same as those described in Test 2. Example 5 is substantially the same as Example 4 in the arrangement of the attraction openings, and is the same as Example 4 in the opening portion areas and shapes of the attraction openings, the sum of the opening portion areas and the different-shape ratio, and the presence of the step portions. Example 5 is different from Example 4 in that the inclined portion shown in FIGS. 3 and 5 is provided in the lid portion.

**Table 3**

| | Inclined portion | Catch factor |
|---|---|---|
| Example 1 | Absent | 2.0 |
| Example 4 | Absent | 2.4 |
| Example 5 | Present | 2.7 |
| Comparative Example 1 | Absent | 1.0 |

As shown in Table 3, when the lid portion had an inclined portion that can reflect light (Example 5), it was observed that the catching performance was further improved compared to Example 4. The catching performance was 2.7 times as high as that of Comparative Example 1.

### [Test 4]

The catching performance of a flying insect pest trap having a tray portion that has a band-shaped protruding portion for guiding flying insect pests to the chemical substance portion, was tested. The result of Test 4 is shown in Table 4. Example 1, Example 4, Example 5, and Comparative Example 1 are the same as those described in Test 3. Example 6 is substantially the same as Example 5 in the arrangement of the attraction openings, and is the same as Example 5 in the opening portion areas and shapes of the attraction openings, the sum of the opening portion areas and the different-shape ratio, and the presence of the step portions and the inclined portion. Example 6 is different from Example 5 in that the band-shaped protruding portion shown in FIG. 2 is provided in the tray portion.

**Table 4**

| | Band-shaped protruding portion | Catch factor |
|---|---|---|
| Example 1 | Absent | 2.0 |
| Example 4 | Absent | 2.4 |
| Example 5 | Absent | 2.7 |
| Example 6 | Present | 2.9 |
| Comparative Example 1 | Absent | 1.0 |

As shown in Table 4, when the tray portion had a band-shaped protruding portion for guiding flying insect pests to the chemical substance portion (Example 6), it was observed that the catching performance was further improved compared to Example 5. The catching performance was 2.9 times as high as that of Comparative Example 1.

As described above, it was found that the flying insect pest traps (Examples 1-6) having the configuration of the present invention can exhibit high catching performance with respect to small flies such as Drosophilidae, etc., and are useful as an insect control product.

### INDUSTRIAL APPLICABILITY

The flying insect pest trap of the present invention is preferably applicable to flying insect pest, particularly small flies such as Drosophilidae, Phoridae, Sciaridae, Mycetophilidae, Psychodidae, etc., and is also applicable to Brachycera such as Muscidae, Calliphoridae, bluebottle and greenbottle flies, Sarcophagidae, etc.

### REFERENCE SIGNS LIST

- 10: TRAY PORTION
- 11: POSITIONING MEMBER
- 12: FLANGE PORTION
- 13: BAND-SHAPED PROTRUDING PORTION
- 14: CONCAVE PORTION
- 20: LID PORTION
- 21: ATTRACTION STRUCTURAL PORTION
- 21a-21e: STEP PORTION
- 22: CONNECTING PORTION
- 23: ATTRACTION OPENING
- 23a-23e: ATTRACTION OPENING
- 24: INCLINED PORTION
- 30: CHEMICAL SUBSTANCE PORTION
- 100: FLYING INSECT PEST TRAP

## Claims

1. A flying insect pest trap (100) for catching a flying insect pest by causing an attracting component in the trap (100) to vaporize and diffuse out of the trap (100), wherein the trap (100) comprises:
a lid portion (20) having a plurality of attraction openings (23) through which the flying insect pest is attracted into the trap (100); and
a tray portion (10) that accommodates a chemical substance portion (30) containing the attracting component, and that is configured to retain the flying insect pest entering the trap (100) through a plurality of attraction openings (23),
**characterized in that**
at least 60% of the plurality of attraction openings (23) have shapes that do not coincide precisely with each other when the shapes are superimposed on each other.

2. The flying insect pest trap (100) of claim 1, **characterized in that**
the plurality of attraction openings (23) are formed at random positions with respect to a center of the lid portion (20) as viewed above.

3. The flying insect pest trap (100) of claim 1, **characterized in that**
the plurality of attraction openings (23) are formed at symmetrical positions with respect to a center of the lid portion (20) as viewed above.

4. The flying insect pest trap (100) of any one of claims 1-3, **characterized in that**
the lid portion (20) has step portions (21a-21e) that position the plurality of attraction openings (23) at heights that are different from each other.

5. The flying insect pest trap (100) of any one of claims 1-4, **characterized in that**
the lid portion (20) has an inclined portion (24) that reflects light.

6. The flying insect pest trap (100) of any one of claims 1-5, **characterized in that**
the tray portion (10) has a band-shaped protruding portion (24), at least a portion of the band-shaped protruding portion (24) being in contact with the chemical substance portion (30).

7. The flying insect pest trap (100) of claim 6, **characterized in that**
the tray portion (10) has a concave portion (14) in an outer side surface of the tray portion (10), wherein when a plurality of the tray portions (10) are stacked in a height direction, an upper edge of the band-shaped protruding portion (24) is engaged with the concave portion (14).

8. The flying insect pest trap (100) of any one of claims 1-7, **characterized in that**
the tray portion (10) is transparent or translucent.

## Patentansprüche

1. Fluginsektenfalle (100) zum Fangen von Fluginsekten durch Bewirken, dass eine Lockkomponente in der Falle (100) verdampft und aus der Falle (100) diffundiert, wobei die Falle (100) umfasst:
einen Deckelabschnitt (20) mit mehreren Locköffnungen (23), durch welche die Fluginsekten in die Falle (100) gelockt werden, und
einen Schalenabschnitt (10), der einen Chemikalienabschnitt (30), welcher den Lockstoff enthält, aufnimmt und der dazu ausgebildet ist, die Fluginsekten, welche durch mehrere Locköffnungen (23) in die Falle (100) gelangen, zurückzuhalten,
**dadurch gekennzeichnet, dass**
mindestens 60 % der mehreren Locköffnungen (23) Formen aufweisen, die, wenn die Formen übereinander angeordnet werden, nicht exakt miteinander übereinstimmen.

2. Fluginsektenfalle (100) nach Anspruch 1,
**dadurch gekennzeichnet, dass**
die mehreren Locköffnungen (23) von oben betrachtet an in Bezug auf einen Mittelpunkt des Deckelabschnitts (20) beliebigen Positionen ausgebildet sind.

3. Fluginsektenfalle (100) nach Anspruch 1,
**dadurch gekennzeichnet, dass**
die mehreren Locköffnungen (23) von oben betrachtet an in Bezug auf einen Mittelpunkt des Deckelabschnitts (20) symmetrischen Positionen ausgebildet sind.

4. Fluginsektenfalle (100) nach einem beliebigen der Ansprüche 1 - 3, **dadurch gekennzeichnet, dass**
der Deckelabschnitt (20) Stufenabschnitte (21a-21e) aufweist, welche die mehreren Locköffnungen (23) an Höhen anordnen, die voneinander verschieden sind.

5. Fluginsektenfalle (100) nach einem beliebigen der Ansprüche 1 - 4, **dadurch gekennzeichnet, dass**
der Deckelabschnitt (20) einen geneigten Abschnitt (24) aufweist, der Licht reflektiert.

6. Fluginsektenfalle (100) nach einem beliebigen der Ansprüche 1 - 5, **dadurch gekennzeichnet, dass**
der Schalenabschnitt (10) einen bandförmigen vorstehenden Abschnitt (24) aufweist, wobei mindestens ein Abschnitt des bandförmigen vorstehenden Abschnitts (24) mit dem Chemikalienabschnitt (30) in Kontakt ist.

7. Fluginsektenfalle (100) nach Anspruch 6, **dadurch gekennzeichnet, dass**
der Schalenabschnitt (10) einen konkaven Abschnitt (14) in einer äußeren Seitenoberfläche des Schalenabschnitts (10) aufweist, wobei, wenn mehrere der Schalenabschnitte (10) in einer Höhenrichtung gestapelt werden, eine Oberkante des bandförmigen vorstehenden Abschnitts (24) mit dem konkaven Abschnitt (14) in Eingriff gelangt.

8. Fluginsektenfalle (100) nach einem beliebigen der Ansprüche 1-7, **dadurch gekennzeichnet, dass**
der Schalenabschnitt (10) transparent oder transluzent ist.

## Revendications

1. Piège d'insecte nuisible volant (100) pour attraper un insecte nuisible volant en provoquant la vaporisation et la diffusion d'un composant d'attraction dans la piège (100) hors du piège (100), dans lequel le piège (100) comprend :
une partie de couvercle (20) ayant une pluralité d'ouvertures d'attraction (23) à travers lesquelles l'insecte nuisible volant est attiré dans le piège (100) ; et
une partie de plateau (10) qui loge une partie de substance chimique (30) contenant le composant d'attraction, et qui est configurée pour retenir l'insecte nuisible volant qui entre dans le piège (100) par une pluralité d'ouvertures d'attraction (23),
**caractérisé en ce que** :
au moins 60% de la pluralité d'ouvertures d'attraction (23) ont des formes qui ne coïncident pas précisément les unes avec les autres lorsque les formes sont superposées entre elles.

2. Piège d'insecte nuisible volant (100) selon la revendication 1, **caractérisé en ce que** :
la pluralité d'ouvertures d'attraction (23) sont formées dans des positions aléatoires par rapport à un centre de la partie de couvercle (20), comme observé de dessus.

3. Piège d'insecte nuisible volant (100) selon la revendication 1, **caractérisé en ce que** :
la pluralité d'ouvertures d'attraction (23) sont formées dans des positions symétriques par rapport à un centre de la partie de couvercle (20), comme observé de dessus.

4. Piège d'insecte nuisible volant (100) selon l'une quelconque des revendications 1 à 3, **caractérisé en ce que** :
la partie de couvercle (20) a des parties de gradin (21a-21e) qui positionnent la pluralité d'ouvertures d'attraction (23) à des hauteurs qui sont différentes les unes des autres.

5. Piège d'insecte nuisible volant (100) selon l'une quelconque des revendications 1 à 4, **caractérisé en ce que** :
la partie de couvercle (20) a une partie inclinée (24) qui reflète la lumière.

6. Piège d'insecte nuisible volant (100) selon l'une quelconque des revendications 1 à 5, **caractérisé en ce que** :
la partie de plateau (10) a une partie en saillie en forme de bande (24), au moins une partie de la partie en saillie en forme de bande (24) étant en contact avec la partie de substance chimique (30).

7. Piège d'insecte nuisible volant (100) selon la revendication 6, **caractérisé en ce que** :
la partie de plateau (10) a une partie concave (14) dans une surface latérale externe de la partie de plateau (10), dans lequel lorsqu'une pluralité de parties de plateau (10) sont empilées dans une direction de hauteur, un bord supérieur de la partie en saillie en forme de bande (24) est mis en prise avec la partie concave (14).

8. Piège d'insecte nuisible volant (100) selon l'une quelconque des revendications 1 à 7, **caractérisé en ce que** :
la partie de plateau (10) est transparente ou translucide.
